# FASCICULE DE BREVET EUROPEEN

(11) **EP 0 601 944 B1**
(45) Date de publication et mention de la délivrance du brevet: **02.04.1997**
(21) Numéro de dépôt: 93420486.8
(22) Date de dépôt: 08.12.1993
(51) Int. Cl.: B23K 1/002

(54) **Appareil de brasage de fonds de casserole**
Verfahren zum Löten von Kochtopfböden
Method for brazing cooking pot bottoms

(30) Priorité: 11.12.1992 FR 9215544
(43) Date de publication de la demande: 15.06.1994
(73) Titulaire: COMPAGNIE FRANCAISE D'ELECTROTHERMIE INDUSTRIELLE C.F.E.I., F-38170 Seyssinet-Pariset (FR)
(72) Inventeur: Tuaz, Frédéric, F-38250 St Nizier du Moucherotte (FR)
(74) Mandataire: de Beaumont, Michel

(56) Documents cités:
- EP-A- 0 037 336
- FR-A- 2 087 327
- FR-A- 2 429 070

## Description

La présente invention concerne un appareil d'assemblage qui s'applique en particulier au report de fonds diffuseurs sur des ustensiles de cuisine.

L'utilisation d'ustensiles de cuisine tels que casseroles, poêles, cocottes, etc., en acier inoxydable est de plus en plus courante. Toutefois, l'acier inoxydable est un mauvais conducteur thermique et il est souhaitable de fixer aux ustensiles de cuisine un fond diffuseur en un matériau bon conducteur thermique, tel que du cuivre ou de l'aluminium. Ces fonds diffuseurs sont généralement rapportés sur les fonds d'ustensiles de cuisine par des procédés de brasage ou de thermocompression.

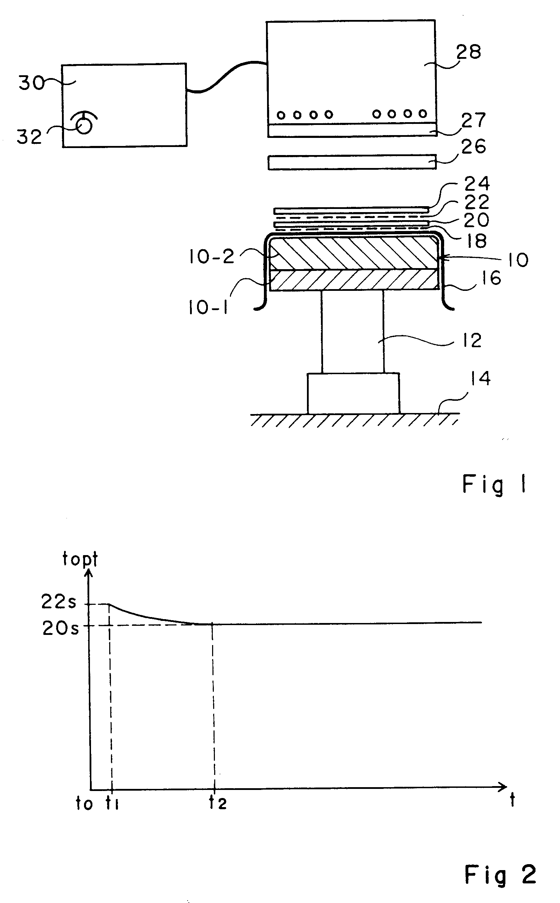

La figure 1 illustre schématiquement un exemple d'une installation classique de brasage de fonds d'ustensiles de cuisine, voir par exemple EP-A1-0 037 336. Cette installation comprend un mandrin 10 fixé sur une chandelle 12 reliée à un vérin à l'intérieur d'un bâti 14. Un ustensile de cuisine 16 tel qu'une casserole est posé sur le mandrin 10, ouverture vers le bas. Sur le fond de la casserole sont empilés successivement un produit de brasure 18 constitué par exemple d'une préforme d'environ 50 micromètres d'épaisseur, le fond diffuseur 20, éventuellement une autre préforme de brasure 22 et une plaque supplémentaire en acier inoxydable 24. Une plaque en acier inoxydable ferromagnétique 26 couramment désignée par le terme "suscepteur" est séparée par un système d'isolement thermique 27 d'un inducteur 28 solidaire du bâti 14 et alimenté par un courant haute fréquence à partir d'une armoire de commande 30 comprenant essentiellement un convertisseur de fréquence.

Lorsqu'on veut effectuer le brasage, le mandrin 10 est levé et presse le fond de la casserole et l'ensemble d'éléments 16 à 26 contre le système d'isolement thermique 27. L'inducteur 28 est alimenté et provoque des courants de Foucault essentiellement dans le suscepteur 26. Le suscepteur 26, qui est ferromagnétique, est rapidement chauffé par les courants induits et transmet la chaleur aux plaques inférieures pour faire fondre la brasure. Les matériaux des éléments 16 à 24 sont amagnétiques et leur chauffage par courants induits est de faible rendement : le champ est quasiment nul au niveau de ces éléments, le suscepteur formant écran.

En pratique, dans des installations industrielles, il est prévu plusieurs mandrins, par exemple trois, sur un plateau tournant de sorte qu'un mandrin est chargé et un autre déchargé pendant que le troisième est en phase de brasage.

L'armoire de commande 30 permet d'ajuster la puissance et le temps de chauffe. Généralement, la puissance est fixée une fois pour toutes lors de la mise en route du système pour une série de casseroles ou autres ustensiles de cuisine en fonction du diamètre des ustensiles et de l'épaisseur de l'ensemble d'éléments à braser. Le temps de chauffe est réglé manuellement à un temps de chauffe optimal par un bouton 32 sur l'armoire de commande et est en principe fixe pour une série donnée. Pour obtenir une bonne qualité de brasure, le temps de chauffe optimal doit être respecté avec précision (avec une marge d'environ 3 %).

La figure 2 illustre un diagramme d'évolution du temps de chauffe optimal topt en fonction du temps t en partant d'un démarrage de l'installation, par exemple en début de journée. Entre des temps t₀ et t₁ l'installation doit être préchauffée. A l'instant t₁ on commence à braser une série de casseroles. Entre les instants t₁ et t₂ apparait une période transitoire pendant laquelle le temps de chauffe topt diminue et ne se stabilise qu'à partir de l'instant t₂. Ainsi, il est indispensable qu'un opérateur ajuste régulièrement le temps de chauffe entre les instants t₁ et t₂.

A titre d'exemple pratique, dans une installation réelle à trois mandrins, dans laquelle le suscepteur est chauffé à une température de l'ordre de 700°C et où la brasure fond à une température de l'ordre de 600°C, utilisée pour des fonds de casseroles d'un diamètre d'une vingtaine de centimètres, le temps optimal initial était de l'ordre de 22 à 23 secondes et l'on n'atteignait une stabilisation du système qu'au bout d'une durée d'environ 2 heures pour laquelle le temps de chauffe optimal devenait de 20 secondes.

Pour pallier les inconvénients indiqués ci-dessus, on a proposé dans l'art antérieur divers procédés de régulation du temps de chauffe optimal. Par exemple, la demande de brevet japonais 60-132 660 du 18 juin 1985 propose un système dans lequel, pendant chaque opération de brasure, et tandis que le piston presse le mandrin contre le suscepteur, on effectue une mesure de la variation d'épaisseur de l'ensemble de plaques et de la brasure pendant l'opération de brasage. On interrompt le chauffage quand cette variation d'épaisseur a atteint une valeur prédéterminée. Toutefois, en pratique, ce système est très difficile à mettre en oeuvre industriellement car la variation d'épaisseur est de l'ordre du micromètre et ne peut donc être mesurée de façon fiable.

Il est apparu à la demanderesse que les divers autres procédés de régulation envisageables présentaient le même inconvénient à savoir qu'ils amènent à mesurer de très petites variations de paramètres.

Un procédé d'assemblage par thermocompression utilise, dans une phase de préchauffe sous pression, une installation similaire, à la différence qu'il n'est pas prévu de préformes de brasure, et soulève des problèmes similaires.

Ainsi, un objet de la présente invention est de prévoir un appareil d'assemblage de fond de casserole dans lequel, plutôt que d'effectuer une régulation du temps de chauffe optimal pendant la période transitoire susmentionnée, on vise à rendre constant ce temps de chauffe, c'est-à-dire à supprimer cette période transitoire.

Un autre objet de la présente invention est de prévoir un tel appareil dans lequel le temps de préchauffe (entre les instants t₀ et t₁) soit bref.

Pour atteindre ces objets, la présente invention prévoit de modifier le mandrin habituellement utilisé dans une telle installation de brasage ou de préchauffe.

Plus particulièrement, la présente invention prévoit un appareil d'assemblage de plusieurs plaques les unes contre les autres dans lequel lesdites plaques sont posées sur la surface supérieure d'un mandrin monté sur une chandelle qui est pressée contre un suscepteur chauffé par induction. Le mandrin est en un matériau thermiquement conducteur et sa liaison avec la chandelle est assurée par un moyen de montage thermiquement isolant tel qu'une rondelle isolante ajourée.

Selon un mode de réalisation de la présente invention, le mandrin est en un alliage métallique.

Selon un mode de réalisation de la présente invention, la face supérieure du mandrin est revêtue d'une couche mince protectrice.

Selon un mode de réalisation de la présente invention, cet appareil est appliqué au brasage de fonds diffuseurs sur des ustensiles de cuisine.

Ces objets, caractéristiques et avantages ainsi que d'autres de la présente invention seront exposés en détail dans la description suivante d'un mode de réalisation particulier faite en relation avec les figures jointes parmi lesquelles :
la figure 1 représente une installation classique de brasage de fonds de casseroles ;
la figure 2 représente l'évolution en fonction du temps de la durée optimale (topt) d'application de courant dans les bobines d'induction de l'installation de la figure 1 ; et
la figure 3 représente une vue explosée d'un mandrin et d'une chandelle selon la présente invention.

Avant de décrire la présente invention, on va revenir sur l'installation classique précédemment décrite en relation avec la figure 1. Dans ce type d'installation, qui est maintenant couramment en service depuis plus de vingt ans, on trouve des mandrins 10 composites munis d'un socle métallique 10-1 sur lequel prend appui la chandelle 12 et d'une partie 10-2 en un matériau isolant, couramment un composé amiante-ciment, usuellement appelé "asbestolithe". La face supérieure de ce mandrin qui appuie contre la face intérieure du fond de casserole doit bien évidemment être relativement lisse et appliquée sensiblement sur toute l'étendue de ce fond de casserole. De plus, cette face et donc l'ensemble du mandrin doivent être indéformables. Ceci conduit à utiliser des mandrins d'un volume et d'une masse relativement importants.

Le fait d'utiliser une partie supérieure de mandrin 10-2 en matériau thermiquement isolant semble a priori tout à fait logique puisqu'on peut penser que ceci permet à la chaleur irradiée par le suscepteur 26 de se concentrer dans la zone comprise entre ce suscepteur et la face supérieure du mandrin, c'est-à-dire la zone où l'opération de brasage doit être effectuée en évitant que la chaleur ne se disperse par conduction dans le mandrin et la chandelle. Ainsi, depuis plus de vingt ans, cette structure de mandrin n'a pas été remise en question.

La présente invention se base sur une observation de l'installation illustrée en figure 1. En partant de cette observation, les inventeurs ont déterminé que la variation de la durée optimale de chauffe du suscepteur 26 par l'inducteur 28 à chaque opération de brasure, pendant la période de mise en route d'une installation, était vraisemblablement due pour l'essentiel au type de mandrin classiquement utilisé. Ainsi, plutôt que de rechercher un procédé de régulation de la durée de chauffage pendant la période de mise en route d'une installation, la présente invention propose de modifier le mandrin pour arriver à une durée de mise en route très faible.

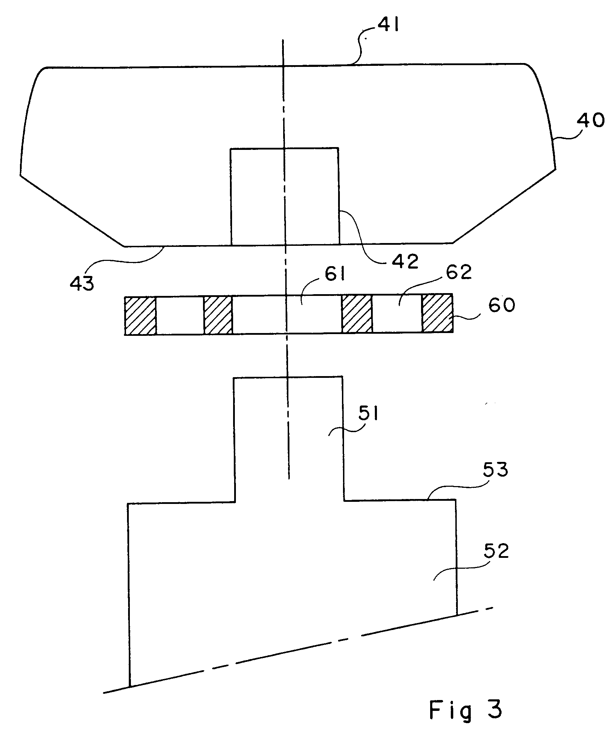

Pour cela, la présente invention propose de remplacer le mandrin de la figure 1 par un mandrin complètement métallique. Un tel mandrin 40 est illustré en figure 3. Il a la forme d'un plateau métallique relativement épais pour que sa face supérieure 41, qui doit recevoir la face intérieure d'un fond de casserole, ne soit pas déformable. Il est de préférence en un métal amagnétique de façon à ne pas subir l'effet des champs produits par les inducteurs 28 (champs qui de toute manière sont largement atténués par la présence du suscepteur 26). En outre, ce plateau comprend à sa face inférieure une ouverture de centrage 42 destiné à recevoir une tige de centrage 51 débordant de la face supérieure d'une chandelle 52. Entre l'épaulement supérieur 53 de cette chandelle et la face inférieure 43 du mandrin est interposée une rondelle 60 en un matériau thermiquement isolant. Cette rondelle comprend une ouverture centrale 61 destinée à laisser passer la tige de centrage 51 et est de préférence en outre munie de perçages 62 qui lui confèrent de meilleures propriétés d'isolement thermique.

La demanderesse a constaté qu'avec une telle structure, dès la mise en route de l'installation, à condition de respecter un temps de préchauffe minimum de l'ordre de quelques minutes entre les instants t₀ et t₁ (voir figure 2), on obtient une température optimale de chauffage à chaque opération qui est sensiblement constante et qui ne varie pas au cours de la durée de fonctionnement.

Le mandrin 40 pourra être en tout métal ou alliage métallique amagnétique souhaité ayant de bonnes qualités de résistance mécanique.

De façon optionnelle, on pourra revêtir la face supérieure 41 du mandrin d'une couche mince d'un matériau pour éviter de rayer la face intérieure des fonds de casseroles et pour protéger, s'il y a lieu, la face apparente du mandrin d'une oxydation. On pourra choisir par exemple un revêtement de cuivre, d'aluminium, de laiton, ou encore de céramique ou de cermet.

Bien entendu, dans le cadre des revendications, la présente invention est susceptible de diverses variantes et modifications, notamment en ce qui concerne les formes de mandrins et les modes d'assemblage du mandrin et de la chandelle, pour autant qu'il demeure un isolement thermique entre mandrin et chandelle.

## Revendications

1. Appareil d'assemblage de plusieurs plaques (16, 18, 20, 22, 24) les unes contre les autres dans lequel lesdites plaques sont posées sur la surface supérieure d'un mandrin (10) monté sur une chandelle (12) qui est pressée contre un suscepteur (26) chauffé par induction,
caractérisé en ce que le mandrin (40) est en un matériau isotrope thermiquement conducteur et en ce que sa liaison avec la chandelle (52) est assurée par un moyen de montage thermiquement isolant (60).

2. Appareil selon la revendication 1, dans lequel ledit assemblage est réalisé par brasage, un produit de brasage (20, 22) étant interposé entre lesdites plaques.

3. Appareil selon la revendication 1, caractérisé en ce que le mandrin est en un alliage métallique.

4. Appareil selon la revendication 1, caractérisé en ce que la face supérieure du mandrin est revêtue d'une couche mince protectrice.

5. Appareil selon la revendication 1, caractérisé en ce que le moyen de montage thermiquement isolant est une rondelle isolante ajourée (60).

6. Appareil selon la revendication 1, caractérisé en ce qu'il est appliqué au brasage de fonds diffuseurs (20) sur des ustensiles de cuisine (16).

## Claims

1. An apparatus for assembling together a plurality of plates (16, 18, 20, 22, 24) in which said plates are placed over the upper surface of a mandrel (10) disposed on a rod (12) which is urged against an induction heated susceptor (26),
characterized in that the mandrel (40) is made of an isotropic thermal conductive material and in that it is connected to the rod (52) by a thermally insulating connection means (60).

2. The apparatus of claim 1, characterized in that said assembling is achieved by soldering, a soldering material (20, 22) being interposed between said plates.

3. The apparatus of claim 1, characterized in that the mandrel is made of a metal alloy.

4. The apparatus of claim 1, characterized in that the upper surface of the mandrel is coated with a thin protection layer.

5. The apparatus of claim 1, characterized in that the thermally insulating connection means is a perforated insulating ring (60).

6. The apparatus of claim 1, characterized in that it is applied to the soldering of diffusion bottoms (20) onto kitchen utensils (16).

## Patentansprüche

1. Mechanismus zum Zusammenbauen mehrerer Platten (16, 18, 20, 22, 24), bei der die Platten auf die obere Stirnfläche eines Dorns (10) übereinander gelegt werden, der auf einer Stange (12) montiert ist, die gegen einen durch Induktion beheizten Suszeptor (26) gedrückt wird,
dadurch **gekennzeichnet**, daß der Dorn (40) aus einem isotropen, wärmeleitenden Werkstoff besteht und daß er mit der Stange (52) über ein thermisch isolierendes Verbindungsmittel (60) verbunden ist.

2. Mechanismus nach Anspruch 1, dadurch **gekennzeichnet**, daß der Zusammenbau durch Löten erfolgt, wobei ein Lötmittel (20, 22) zwischen die Platten eingefügt wird.

3. Mechanismus nach Anspruch 1, dadurch **gekennzeichnet**, daß der Dorn aus einer Metallegierung besteht.

4. Mechanismus nach Anspruch 1, dadurch **gekennzeichnet**, daß die obere Stirnfläche des Dorns mit einer dünnen Schutzschicht beschichtet ist.

5. Mechanismus nach Anspruch 1, dadurch **gekennzeichnet**, daß das thermisch isolierende Verbindungsmittel ein perforierter Isolierring (60) ist.

6. Mechanismus nach Anspruch 1, dadurch **gekennzeichnet**, daß er für das Löten von Diffusionsböden (20) auf Küchengeräte (16) verwendet wird.
